# NEUE EUROPÄISCHE PATENTSCHRIFT

(11) **EP 2 815 131 B2**
(45) Veröffentlichungstag und Bekanntmachung des Hinweises auf die Entscheidung über den Einspruch: **12.06.2019**
(45) Hinweis auf die Patenterteilung: 20.07.2016
(21) Anmeldenummer: 13704086.1
(22) Anmeldetag: 11.02.2013
(51) Int. Cl.: F04F 5/52

(54) **VERFAHREN ZUM BETREIBEN EINES UNTERDRUCKERZEUGERS UND UNTERDRUCKERZEUGERVORRICHTUNG**
METHOD FOR OPERATING A SUCTION GENERATING DEVICE AND SUCTION GENERATING DEVICE
PROCÉDÉ DE FONCTIONNEMENT D'UN GÉNÉRATEUR DE SUCCION ET DISPOSITIF DE GÉNÉRATEUR DE SUCCION

(30) Priorität: 13.02.2012 DE 102012202124
(43) Veröffentlichungstag der Anmeldung: 24.12.2014
(73) Patentinhaber: J. Schmalz GmbH, 72293 Glatten (DE)
(72) Erfinder: HOLECEK, Thomas, 72250 Freudenstadt (DE); EISELE, Thomas, 72275 Alpirsbach/Peterzell (DE); KUOLT, Harald, 78586 Deilingen (DE); FREY, Christian, 72270 Baiersbronn/Röt (DE)
(74) Vertreter: DREISS Patentanwälte PartG mbB
(86) Internationale Anmeldenummer: PCT/EP2013/052675
(87) Internationale Veröffentlichungsnummer: WO 2013/120801

(56) Entgegenhaltungen:
- EP-A1- 2 080 913
- DE-A1- 4 229 834
- DE-A1-102007 058 114
- DE-A1-102007 061 820

## Beschreibung

Die Erfindung betrifft ein Verfahren zum Betreiben eines Unterdruckerzeugers mit Druckfluid zum Erzeugen des Unterdrucks. Die Erfindung betrifft außerdem eine Unterdruckerzeugervorrichtung.

Zum Betreiben von Unterdruckhandhabungsvorrichtungen wie Greif- oder Spannvorrichtungen sind Unterdruckerzeuger bekannt, z.B. sogenannte Ejektoren, welche mit Druckluft betrieben werden und aufgrund einer Druckluftzufuhr einen Unterdruck in einem Sauganschluss bereitstellen. Die Erzeugung des Unterdrucks aus einem Druckluftstrom erfolgt bei solchen Ejektoren beispielsweise mittels einer Venturi-Düse. Im Folgenden Zusammenhang wird ein sich im Sauganschluss einstellender Druck unterhalb des Umgebungsdrucks als Unterdruck bezeichnet.

Für den Betrieb der genannten Unterdruckerzeuger ist es bekannt, die Druckluftzufuhr nicht ununterbrochen vorzunehmen, sondern zeitabschnittsweise zu deaktivieren. Außerdem ist es bekannt, den im Sauganschluss erzeugten Unterdruck zu überwachen und zur Regelung des Unterdruckerzeugers einzusetzen. Die Druckluftzufuhr zum Erzeugen von Unterdruck kann dann in Abhängigkeit des im Sauganschluss herrschenden Unterdrucks aktiviert und deaktiviert werden. Dies erlaubt es, den Druckluftverbrauch des Unterdruckerzeugers im Betrieb mit einer Unterdruckhandhabungsvorrichtung zu verringern, indem die Druckluftzufuhr deaktiviert wird, wenn der Unterdruck im Sauganschluss einen Haltewert erreicht. Eine Aktivierung kann dann wieder erfolgen, wenn der Unterdruck im Sauganschluss (z.B. aufgrund von Leckage) auf einen Regelwert angestiegen ist.

Im Betrieb von Unterdruckerzeugern ist eine Überwachung des Energieverbrauchs erwünscht, da eine Verschlechterung der Energieeffizienz zu unerwünschten Kosten führt. Hierbei ist zu beachten, dass zusätzliche Messeinrichtungen im Unterdrucksystem zu Fehleranfälligkeit oder Leckage führen können.

Der Erfindung liegt die Aufgabe zugrunde, bei Unterdruckerzeugern auf einfache Weise eine zuverlässige Überwachung der Energieeffizienz zu ermöglichen.

Diese Aufgabe wird durch ein Verfahren zum Betreiben eines Unterdruckerzeugers nach Anspruch 1, sowie durch eine Unterdruckerzeugervorrichtung nach Anspruch 11 gelöst.

Die Erfindung bezieht sich auf Unterdruckversorger, welche eine Saugwirkung unter Verwendung von Druckfluid erzeugen, welches beispielsweise von einer Druckfluidversorgungseinrichtung bereitgestellt wird. Solche Unterdruckerzeuger weisen meist einen Druckzugang zur Druckfluidzufuhr und einen Sauganschluss zur Unterdruckversorgung einer Unterdruckhandhabungsvorrichtung auf. Regelmäßig ist außerdem ein Auslass vorgesehen, durch welchen Druckfluid sowie durch den Sauganschluss angesaugtes Fluid oder Luft abgeführt werden kann.

Zum Betreiben des Unterdruckerzeugers wird ein Arbeitszyklus durchgeführt, wobei während des Arbeitszyklus die Druckfluidzufuhr wenigstens einmal aktiviert, d. h. die Zufuhr von Druckfluid zum Unterdruckerzeuger freigegeben wird, und die Druckfluidzufuhr danach wenigstens einmal wieder deaktiviert d.h. unterbunden wird (vgl. z.B. die Druckschrift DE-A-10 2007 061 820 bzw. DE-A-10 2007 058 114).

Erfindungsgemäß wird in dem Arbeitszyklus eine Aktivzeitdauer gemessen, über welche die Druckfluidzufuhr während des Arbeitszyklus aktiviert ist.

Der Erfindung liegt der Gedanke zugrunde, in einem Arbeitszyklus diejenige Zeitdauer zu ermitteln, über welche dem Unterdruckerzeuger Druckfluid zur Erzeugung einer Saugwirkung zugeführt wird. Über diese Zeitdauer entnimmt der Unterdruckerzeuger z.B. Energie von einer Druckfluidversorgungseinrichtung, welche das Druckfluid bereitstellt. Dies ermöglicht es, Informationen über den Energieverbrauch im Betrieb des Unterdruckerzeugers zu ermitteln. Wie nachfolgend noch näher erläutert, lässt sich z.B. eine Verschlechterung des Systems erkennen und/oder der Energieverbrauch z.B. aus Druckdaten absolut ermitteln. Die Aktivzeitdauer kann ein zusammenhängendes Zeitintervall zwischen einem Einschaltzeitpunkt und einem Abschaltzeitpunkt der Druckfluidzufuhr sein. Denkbar ist jedoch auch, dass sich die Aktivzeitdauer in einem Arbeitszyklus aus mehreren jeweils zusammenhängenden Aktivzeitdauerabschnitten zusammensetzt, welche untereinander von Zeitabschnitten mit deaktivierter Druckluftzufuhr unterbrochen sind.

Die Messung der Zeitdauer erfolgt insbesondere mittels einer Zeitmesseinrichtung, welche vorzugsweise in dem Unterdruckerzeuger selbst integriert ist. Denkbar ist jedoch auch eine externe Überwachung.

Aufgrund einer frühzeitigen Erkennung einer Verschlechterung der Energieeffizienz können rechtzeitig oder vorbeugend Wartungs- oder Instandhaltungsarbeiten veranlasst werden. So können unerwünschte Ausfälle und erhöhte Kosten aufgrund geringer Energieeffizienz vermieden werden.

Die Ermittlung der Energieeffizienz über Aktivzeitdauer erlaubt es, auf zusätzliche Sensoren wie Volumenstrommesser zu verzichten. Zusätzliche Sensoren können jedoch zur weiteren Ausgestaltung sinnvoll sein. Insgesamt kann ein System mit geringer Störungsanfälligkeit bereitgestellt werden.

Das erfindungsgemäße Verfahren dient zum Betreiben von durch Druckfluidzufuhr angetriebenen Unterdruckerzeugern. Die Druckfluidzufuhr ist dabei aktivierbar und deaktivierbar. Im aktivierten Zustand der Druckfluidzufuhr wird durch den Sauganschluss angesaugt und so ggf. ein Unterdruck erzeugt. Dabei strömt Druckfluid dem Unterdruckerzeuger durch den Druckzugang zu. Im deaktivierten Zustand ist die Strömung von Druckfluid unterbunden. Hierbei ist jedoch nicht ausgeschlossen, dass im Druckzugang weiterhin Druckfluid mit einem statischen Druck ansteht. Beispielsweise kann der Unterdruckerzeuger ein dem Druckzugang zugeordnetes Versorgungsventil derart aufweisen, dass ein Strom von Druckfluid durch den Druckzugang unterbindbar und freigebbar ist.

Im Betrieb des Unterdruckerzeugers werden Arbeitszyklen durchgeführt. In einem Arbeitszyklus wird die Druckfluidzufuhr zu wenigstens einem Einschaltzeitpunkt aktiviert und zu wenigstens einem Abschaltzeitpunkt deaktiviert. Der Beginn des Arbeitszyklus ist beispielsweise als ein erster Einschaltzeitpunkt der Druckfluidzufuhr definiert, nach welchem die Druckfluidzufuhr ggf. zumindest einmal wieder deaktiviert wird und danach wieder aktiviert wird. Das Ende des Arbeitszyklus ist dann durch den letzten Abschaltzeitpunkt der Druckfluidzufuhr definiert. Im Betrieb des Unterdruckerzeugers mit einer Unterdruckhandhabungsvorrichtung zur Handhabung eines Werkstücks (z.B. Unterdruckgreifvorrichtung, Unterdruckspannvorrichtung) kann der Arbeitszyklus dadurch definiert sein, dass der Beginn des Arbeitszyklus durch den ersten Einschaltzeitpunkt der Druckfluidzufuhr definiert ist, ab welchem ein Handhabungsvorgang (z.B. Greifen, Spannen) des Werkstücks beginnt. Dies kann z.B. der Zeitpunkt des Beginns des Ansaugens eines Werkstücks zu einer Handhabungsvorrichtung sein. Das Ende des Arbeitszyklus wird beispielsweise durch den letzten Abschaltzeitpunkt der Druckfluidzufuhr festgelegt, zu welchem der Handhabungsvorgang des Werkstücks beendet ist. Zwischen dem ersten Einschaltzeitpunkt und dem letzten Abschaltzeitpunkt kann die Druckfluidzufuhr zumindest einmal deaktiviert und wieder aktiviert werden.

Ein Arbeitszyklus für den Betrieb eines Unterdruckerzeugers für ein Handhabungssystem umfasst üblicherweise die nachfolgend erläuterten, aufeinanderfolgenden Arbeitsbereiche. In einem ersten Arbeitsbereich erfolgt die Aktivierung der Druckfluidzufuhr zur Erzeugung von Unterdruck, beispielsweise um mit dem Ansaugen eines Werkstücks zu einer Unterdruckhandhabungsvorrichtung zu beginnen. Durch das Ansaugen fällt der Unterdruck im Sauganschluss ausgehend von dem Umgebungsdruck zu einem Haltewert H1 ab. Der Haltewert H1 ist beispielsweise so gewählt, dass ein sicheres Handhaben des Werkstückes möglich ist. Gegebenenfalls kann in einem zweiten Arbeitsbereich die Druckfluidzufuhr zur Erzeugung von Unterdruck derart geregelt werden, dass der in dem Sauganschluss herrschende Druck zwischen dem Haltewert (H1) und einem Regelhaltewert (H1+h1) liegt, wie weiter unten noch näher erläutert (wobei h1 einen positiven Offset-Druck über dem unterhalb des Umgebungsdrucks liegenden Haltewert H1 entspricht). Der Arbeitszyklus umfasst schließlich meist noch einen weiteren Arbeitsbereich (dritter Arbeitsbereich), in welchem der in dem Sauganschluss herrschende Unterdruck zumindest wieder auf den Umgebungsdruck ansteigt, um das Werkstück loszulassen. Um ein Ablösen des Werkstücks von einer Unterdruckshandhabungsvorrichtung zu gewährleisten, kann der Druck in dem Sauganschluss noch über den Umgebungsdruck hinaus auf einen Abblasdruck ansteigen (Abblasen des Werkstücks).

Es wird während des Arbeitszyklus der in dem Druckzugang herrschende Versorgungsdruck des Druckfluids gemessen. Insbesondere erfolgt eine Messung des Gesamtdrucks, welcher den statischen und den dynamischen Druck des Druckfluids umfasst. Aus der gemessenen Aktivzeitdauer und dem gemessenen Versorgungsdruck wird unter Zuhilfenahme von bekannten Strömungskenngrößen des Unterdruckerzeugers, welche strömungstechnische Eigenschaften des Unterdruckerzeugers wiedergeben, das dem Unterdruckerzeuger zugeführte Volumen an Druckfluid und/oder die dem Unterdruckerzeuger mittels des Druckfluids zugeführte Energie ermittelt. Die Strömungskenngrößen können beispielsweise in einer Kennlinie oder einem Datenfeld niedergelegt sein, welche einen Zusammenhang zwischen dem Versorgungsdruck im Druckzugang, der Aktivzeitdauer und dem durch den Druckzugang strömenden Volumen an Druckfluid wiedergeben. Denkbar ist auch, eine bekannte Abhängigkeit des Volumenstroms an Druckfluid durch den Druckzugang von dem im Druckzugang herrschenden Versorgungsdruck zugrunde zu legen.

Nach einem grundlegenden Aspekt der Erfindung können mehrere, aufeinander folgende Arbeitszyklen durchgeführt werden, wobei in jedem der Arbeitszyklen oder in einer Auswahl aus aufeinanderfolgenden Arbeitszyklen jeweils die Aktivzeitdauer gemessen wird, und entsprechende Daten in einer Speichereinrichtung hinterlegt werden. Dies ermöglicht es, eine Entwicklung bzw. einen Trend der Aktivzeit und/oder von hieraus abgeleiteten Informationen (Druckfluidverbrauch, Energieverbrauch, ...) in Abhängigkeit der aufeinander folgenden Arbeitszyklen zu ermitteln.

Die Entwicklung des zugeführten Volumens an Druckfluid und/oder der zugeführten Energie kann dann z.B. über eine Anzeigeeinrichtung dargestellt werden. Vorzugsweise wird aus den hinterlegten Daten eine Trendinformation über das zugeführte Volumen an Druckfluid und/oder die dem Unterdruckerzeuger über Druckfluid zugeführte Energie ermittelt, welche die Entwicklung der jeweiligen Größe in Abhängigkeit der aufeinanderfolgenden Arbeitszyklen repräsentiert. Die Trendinformation kann aus den hinterlegten Daten beispielsweise in einer Steuereinrichtung des Unterdruckerzeugers berechnet werden. Die Trendinformation kann beispielsweise einen positiven Wert für einen steigenden Verbrauch, und einen negativen Wert für einen sinkenden Verbrauch enthalten. Die Trendinformation kann über eine Anzeigenrichtung dargestellt werden und/oder über eine Kommunikationsschnittstelle des Unterdruckerzeugers übertragen werden, z.B. zu einer externen Steuereinrichtung.

Nach einem weiteren Aspekt der Erfindung wird für einen Arbeitszyklus eine Zyklusdauer gemessen, über welche der Arbeitszyklus durchgeführt wird. Die Zyklusdauer gibt insofern die für einen Arbeitszyklus benötigte Zeitdauer wieder. In Verbindung mit der ermittelten Aktivzeitdauer in einem Arbeitszyklus wird so eine Aussage darüber ermöglicht, über welchen Anteil der Zeitdauer eines Arbeitszyklus der Unterdruckerzeuger Energie aufnimmt. Auch ohne Druckmessung und/oder Volumenstrommessung lässt sich hieraus eine Information über die Energieeffizienz des Gesamtsystems ermitteln.

Aus der Aktivzeitdauer und der Zykluszeitdauer kann für den Arbeitszyklus ein Aktivzeitverhältnis berechnet werden, z.B. als Quotient aus Aktivzeitdauer und Zyklusdauer. Ein das Aktivzeitverhältnis wiedergebender Wert kann dem jeweiligen Arbeitszyklus zugeordnet und in einer Speichereinrichtung hinterlegt werden. Die Ermittlung des Aktivzeitverhältnisses erlaubt eine komfortable softwaretechnische Verarbeitung und ermöglicht den Vergleich verschiedener Arbeitszyklen miteinander. Auch die Darstellung der gewonnenen Information kann durch die Verhältnisbildung vereinfacht werden.

Vorzugsweise werden mehrere aufeinander folgende Arbeitszyklen durchgeführt und für den jeweiligen Arbeitszyklus Daten über die Aktivzeitdauer und die Zykluszeitdauer und/oder über das Aktivzeitverhältnis in einer Speichereinrichtung hinterlegt. Aus den so hinterlegten Daten kann wiederum eine Trendinformation für die Aktivzeitdauer und/oder die Zykluszeitdauer und/oder über das Aktivzeitverhältnis ermittelt bzw. berechnet werden. Die zur Informationsermittlung herangezogenen Arbeitszyklen können unmittelbar aufeinanderfolgen. Es können jedoch auch weitere Arbeitszyklen zwischen den zur Informationsermittlung verwendeten Arbeitszyklen durchgeführt werden.

Zur weiteren Ausgestaltung kann während des oder der Arbeitszyklen oder auch andauernd eine Anzeige der mittels der Aktivzeitdauer ermittelten Informationen erfolgen. Die mittels der Aktivzeitdauer ermittelten Informationen können beispielsweise das in dem Arbeitszyklus zugeführte Volumen an Druckfluid und/oder die zugeführte Energie und/oder das Aktivzeitverhältnis betreffen. Denkbar ist auch die Darstellung von Trendinformationen über das zugeführte Volumen an Druckfluid und/oder über die zugeführte Energie und/oder über das Aktivzeitverhältnis.

Grundsätzlich ist es vorteilhaft, die Druckfluidzufuhr in Abhängigkeit des erzeugten Unterdrucks im Sauganschluss zu aktivieren und zu deaktivieren. Hierzu wird vorzugsweise während des Arbeitszyklus der in dem Sauganschluss herrschende Saugseitendruck gemessen und die Druckfluidzufuhr in Abhängigkeit des gemessenen Saugseitendrucks aktiviert bzw. deaktiviert. Dies erfolgt insbesondere derart, dass die Druckfluidzufuhr zur Unterdruckerzeugung dann deaktiviert wird, wenn der Saugseitendruck auf einen Haltewert (H1) unterhalb des Umgebungsdrucks abgesunken ist, oder diesen unterschreitet. Die Druckfluidzufuhr wird beispielsweise dann wieder aktiviert, wenn nach der Deaktivierung der Saugseitendruck wieder auf einen Regelhaltewert (H1+h1) angestiegen ist (wobei h1 einem positiven Offset-Druck über dem Haltewert H1 entspricht).

Die eingangs gestellte Aufgabe wird auch durch eine Unterdruckerzeugervorrichtung gelöst, welche zur Durchführung des vorstehend beschriebenen Verfahrens ausgebildet ist. Die Unterdruckerzeugervorrichtung weist einen Druckzugang zur Druckfluidzufuhr und einen Sauganschluss zur Unterdruckversorgung einer Unterdruckhandhabungsvorrichtung auf, sowie ggf. einen Auslass. Ferner ist eine Steuereinrichtung derart vorgesehen, dass die Druckfluidzufuhr zum Druckzugang aktivierbar und deaktivierbar ist. Die Unterdruckerzeugervorrichtung umfasst außerdem eine Unterdruckerzeugereinheit, welche über den Druckzugang mit Druckfluid gespeist werden kann und dadurch im Sauganschluss eine Saugwirkung bereitstellt (z.B. Venturi-Düse).

Erfindungsgemäß ist eine Zeitmesseinrichtung derart vorgesehen, dass eine Aktivzeitdauer messbar ist, über welche im Betrieb der Vorrichtung die Druckfluidzufuhr während eines Arbeitszyklus aktiviert ist.

Die Druckfluidzufuhr ist beispielsweise dadurch aktivierbar und deaktivierbar, dass die Unterdruckerzeugervorrichtung ein Versorgungsventil aufweist, mittels welchem eine Zufuhr von Druckfluid durch den Druckzugang unterbindbar und freigebbar ist. Das Versorgungsventil wird vorzugsweise von der Steuereinrichtung zur Aktivierung und Deaktivierung der Druckfluidzufuhr angesteuert. Die Zeitmesseinrichtung kann in der Steuereinrichtung integriert ausgebildet sein. Vorzugsweise ist die Steuereinrichtung, die Zeitmesseinrichtung und ggf. das Versorgungsventil in einem gemeinsamen Gehäuse der Unterdruckerzeugereinrichtung angeordnet.

Zusätzlich kann ein Versorgungsdrucksensor vorgesehen sein, mittels welchem der in dem Druckzugang herrschende Versorgungsdruck des Druckfluids messbar ist. Insbesondere kann die Unterdruckerzeugervorrichtung selbst den Versorgungsdrucksensor aufweisen. Der Versorgungsdrucksensor kann beispielsweise in dem Gehäuse der Unterdruckerzeugereinrichtung integriert sein. Denkbar ist jedoch auch eine externe Messung des Versorgungsdrucks, wobei die Messwerte der Unterdruckerzeugervorrichtung zugeführt werden können. Hierzu kann diese eine entsprechende Kommunikationsschnittstelle aufweisen.

Zur weiteren Ausgestaltung ist ein Saugdrucksensor vorgesehen, mittels welchem der in dem Sauganschluss herrschende Saugseitendruck messbar ist. Der Saugdrucksensor wirkt vorzugsweise derart mit der Steuereinrichtung zusammen, dass die Steuereinrichtung die Druckfluidzufuhr in Abhängigkeit des Saugseitendrucks aktiviert und deaktiviert.

Um die im Sinne des erfindungsgemäßen Verfahrens ermittelbaren Informationen zu visualisieren, kann die Unterdruckerzeugervorrichtung eine Anzeigeeinrichtung aufweisen. Wie erläutert, kann es sich bei den ermittelbaren Informationen insbesondere um das in einem Arbeitszyklus zugeführte Volumen an Druckfluid und/oder die über Druckfluid zugeführte Energie und/oder ein Aktivzeitverhältnis und/oder eine Trendinformation über das zugeführte Volumen bzw. die zugeführte Energie oder das Aktivzeitverhältnis handeln.

Weitere Einzelheiten und vorteilhafte Ausgestaltungen der Erfindung sind der nachfolgenden Beschreibung zu entnehmen, anhand derer die in den

Figuren dargestellten Ausführungsformen der Erfindung näher beschrieben und erläutert sind.

Es zeigen:
Figur 1 skizzierte Darstellung einer Unterdruckerzeugervorrichtung zur Durchführung des erfindungsgemäßen Verfahrens;
Figur 2 schematische Darstellung des Drucks im Sauganschluss in Abhängigkeit der Zeit für einen Arbeitszyklus zur Erläuterung eines ersten erfindungsgemäßen Verfahrens;
Figur 3 schematische Darstellung des Unterdrucks im Sauganschluss als Funktion der Zeit über einen Arbeitszyklus zur Erläuterung eines weiteren erfindungsgemäßen Verfahrens.

Zur besseren Übersichtlichkeit sind in der nachfolgenden Beschreibung sowie in den Figuren für gleiche oder einander entsprechende Merkmale dieselben Bezugszeichen verwendet.

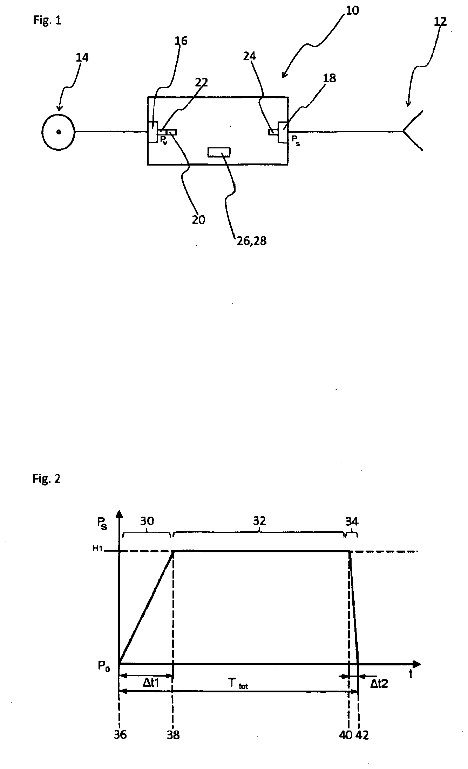

Die Figur 1 zeigt einen Unterdruckerzeuger 10, mittels welchem eine Unterdruckversorgung für eine skizziert angedeutete Unterdruckhandhabungsvorrichtung 12 (z.B. Sauggreifer) bereitgestellt werden kann. Ferner ist eine Druckfluidversorgungseinrichtung 14 dargestellt, mittels welcher Druckfluid zur Versorgung des Unterdruckerzeugers 10 bereitgestellt werden kann.

Der Unterdruckerzeuger 10 weist einen Druckzugang 16 und einen Sauganschluss 18 auf. Ferner kann ein nicht näher dargestellter Auslass zur Abführung von Druckfluid und/oder angesaugtem Fluid vorgesehen sein. Der Druckzugang 16 ist mit der Druckfluidversorgungseinrichtung 14 druckverbunden. An den Sauganschluss 18 ist die Unterdruckhandhabungsvorrichtung 12 angeschlossen.

Der Unterdruckerzeuger 10 umfasst außerdem ein Unterdruckerzeugungsmittel (nicht näher dargestellt), welches dazu eingerichtet ist, bei Zufuhr eines Volumenstroms von Druckfluid durch den Druckzugang 16 eine Saugwirkung in dem Sauganschluss 18 zu erzeugen (z.B. Venturi-Düse).

Der Unterdruckerzeuger 10 weist ein Versorgungsventil 20 auf, mittels welchem eine Zufuhr von Druckfluid durch den Druckzugang 16 unterbindbar und freigebbar ist, so dass ein Ansaugen durch den Sauganschluss 18 deaktivierbar und aktivierbar ist. Insofern ist die Druckfluidzufuhr zum Erzeugen von Unterdruck mittels des Versorgungsventils 20 aktivierbar und deaktivierbar.

In dem Unterdruckerzeuger 10 kann ein Versorgungsdrucksensor 22 derart angeordnet sein, dass der in dem Druckzugang 16 herrschende Versorgungsdruck p_{V} des Druckfluids messbar ist. Der Versorgungsdrucksensor 22 kann jedoch auch außerhalb des Unterdruckerzeugers 10, beispielsweise in einer Zuleitung von der Druckfluidversorgungseinrichtung 14 zu dem Unterdruckerzeuger 10 angeordnet sein. Ferner ist ein Saugdrucksensor 24 vorgesehen, mittels welchem der in dem Sauganschluss 18 herrschende Saugseitendruck p_{S} messbar ist. Der Saugdrucksensor 24 ist nicht zwingend erforderlich, ermöglicht jedoch in vorteilhafter Weise eine Ansteuerung des Unterdruckerzeugers 10.

Der Unterdruckerzeuger 10 umfasst ferner eine Steuereinrichtung 26, mittels welcher das Versorgungsventil 20 zur Aktivierung und Deaktivierung der Druckfluidzufuhr ansteuerbar ist. Vorzugsweise ist die Steuereinrichtung 26 derart ausgebildet, dass die Druckfluidzufuhr in Abhängigkeit des mittels des Saugdrucksensors 24 gemessenen Saugseitendrucks p_{S} ansteuerbar ist, wie nachfolgend noch näher erläutert.

Darüber hinaus ist eine Zeitmesseinrichtung 28 vorgesehen, mittels welcher eine Zeitdauer messbar ist, über welche die Druckfluidzufuhr zu dem Unterdruckerzeuger 10 aktiviert ist, d.h. über welche sich das Versorgungsventil 20 in einer Stellung befindet, in welcher die Zufuhr von Druckfluid zu dem Unterdruckerzeuger 10 zur Erzeugung einer Saugwirkung freigegeben ist. Diese im Folgenden als Aktivzeitdauer bezeichnete Zeitdauer muss nicht zusammenhängend sein, sondern kann sich aus mehreren Zeitabschnitten zusammensetzen, welche von Zeitabschnitte unterbrochen sind, in welchen die Druckfluidzufuhr deaktiviert ist, d.h. mittels des Versorgungsventils 20 eine Druckfluidzufuhr unterbunden ist.

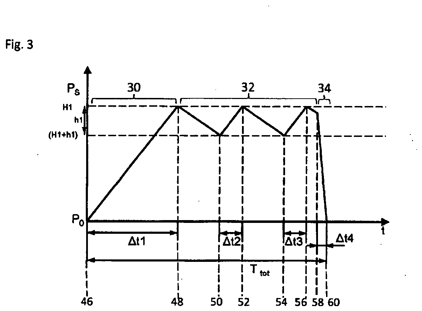

Im Betrieb des Unterdruckerzeugers 10 mit der Unterdruckhandhabungsvorrichtung 12 werden aufeinanderfolgend Arbeitszyklen durchgeführt. Anhand der Figuren 2 und 3 werden im Folgenden verschiedene Arbeitszyklen beschrieben. In den dargestellten Diagrammen ist jeweils auf der Ordinate nach oben ein in dem Sauganschluss 18 herrschender Unterdruck unterhalb des Umgebungsdrucks p0 aufgetragen. Positive Y-Werte (Ordinate) entsprechen dabei einem den Umgebungsdruck p0 unterschreitenden Druck in dem Sauganschluss 18, im Folgenden Saugseitendruck p_{S} genannt. Die Abszisse (X-Achse) stellt den Zeitverlauf dar. Dargestellt ist jeweils ein Arbeitszyklus, welcher sich dadurch auszeichnet, dass der Saugseitendruck p_{S} ausgehend von dem Umgebungsdruck p0 der Unterdruckhandhabungsvorrichtung 12 absinkt (d.h. sich ein Unterdruck mit positivem Wert auf der Y-Achse einstellt) und nach einer zeitlichen Variation wieder zu dem Umgebungsdruck p0 zurückkehrt.

Die Figur 2 zeigt den Zeitverlauf des Saugseitendrucks p_{S} in einem Arbeitszyklus, bei welchem durch Aufnahme eines Werkstücks an der Unterdruckhandhabungsvorrichtung 12 eine Strömung von angesaugter Luft durch den Sauganschluss 18 vollständig unterbunden wird. Dies kann beispielsweise bei einem vollständig dicht an einem Sauggreifer anliegenden Werkstück der Fall sein.

Der dargestellte Arbeitszyklus ist in seinem Zeitverlauf (entlang der Zeitachse) in drei aufeinanderfolgende Arbeitsbereiche 30, 32 und 34 unterteilt. In dem ersten Arbeitsbereich 30 erfolgt zu einem ersten Einschaltzeitpunkt 36 eine Aktivierung der Druckfluidzufuhr. Dadurch beginnt ein Ansaugen durch den Sauganschluss 18 des Unterdruckerzeugers 10. Durch die Saugwirkung fällt der mit dem Saugdrucksensor 24 messbare Saugseitendruck p_{S} in dem Sauganschluss 18 ab, d.h. in der Darstellung der Figur 2 ist ein zunehmender Unterdruck erkennbar. Zu einem Zeitpunkt 38 hat der Saugseitendruck p_{S} einen Haltewert H1 erreicht. Dieser ist so gewählt, dass eine sichere Handhabung eines Werkstückes mit der Unterdruckhandhabungsvorrichtung 12 möglich ist.

Die Steuereinrichtung 26 des Unterdruckerzeugers 10 steuert das Versorgungsventil 20 derart an, dass die Druckfluidzufuhr dann deaktiviert wird, wenn der Saugseitendruck p_{S} auf den Haltewert H1 abgesunken ist, bzw. diesen unterschritten hat. Folglich wird im dargestellten Beispiel die Druckfluidzufuhr zum sogenannten ersten Abschaltzeitpunkt 38 deaktiviert.

Mittels der Zeitmesseinrichtung 28 des Unterdruckerzeugers 10 ist eine Zeitdauer Δt1 messbar, über welche dem Unterdruckerzeuger Druckfluid zugeführt wird, um in den ersten Arbeitsbereich 30 eine Saugwirkung bereitzustellen und den Saugseitendruck p_{S} ausgehend von dem Umgebungsdruck nach dem Einschaltzeitpunkt 36 auf den Haltewert H1 absinken zu lassen. In der Steuereinrichtung 26 können dann für den Arbeitszyklus Daten hinterlegt werden, welche die Zeitdauer Δt1 repräsentieren.

In dem für Figur 2 angenommenen, idealisierten Fall ist der Sauganschluss 18 des Unterdruckerzeugers 10 nach Erreichen des Haltewerts H1 über die Unterdruckhandhabungsvorrichtung 12 und das hiermit aufgenommene Werkstück dicht abgeschlossen, so dass kein weiteres Ansaugen erforderlich ist, um den Unterdruck in dem Sauganschluss 18 aufrechtzuerhalten. In diesem Fall kann daher nach Abschalten der Druckfluidzufuhr zum ersten Abschaltzeitpunkt 38 die Druckfluidzufuhr über den zweiten Arbeitsbereich 32 deaktiviert bleiben. Der zweite Arbeitsbereich 32 wird dadurch beendet, dass die Druckfluidzufuhr zu einem zweiten Einschaltzeitpunkt 40 wieder aktiviert wird und im dargestellten Beispiel dadurch der dritte Arbeitsbereich 34 beginnt. Dieser dient beispielsweise dazu, den in dem Sauganschluss 18 und damit für die Unterdruckhandhabungsvorrichtung 12 bereitgestellten Unterdruck wieder abzubauen, um beispielsweise ein aufgenommenes Werkstück freizugeben. Dies kann beispielsweise dadurch geschehen, dass die Druckfluidzufuhr aktiviert ist, wobei über ein nicht näher dargestelltes Abblasventil der Druckzugang 16 derart mit dem Sauganschluss 18 verbunden ist, dass der Sauganschluss 18 belüftet wird. In dem dritten Arbeitsbereich 34 steigt der Saugseitendruck p_{S} wieder auf den Umgebungsdruck p₀ an. Denkbar ist auch, dass der Saugseitendruck p_{S} in dem dritten Arbeitsbereich 34 kurzfristig über den Umgebungsdruck p₀ ansteigt, um ein Abblasen eines mit der Unterdruckhandhabungsvorrichtung 12 aufgenommenen Werkstücks zu gewährleisten. Zum Ende des dargestellten Arbeitszyklus wird die Druckfluidzufuhr zu einem zweiten Abschaltzeitpunkt 42 wieder deaktiviert.

Mit der Zeitmesseinrichtung 28 des Unterdruckerzeugers 10 ist zwischen dem zweiten Einschaltzeitpunkt 40 und dem zweiten Abschaltzeitpunkt 42 ein weiterer Aktivzeitdauerabschnitt Δt2 messbar. In der Steuereinrichtung 26 können z.B. Daten hinterlegt werden, welche für einen Arbeitszyklus der Länge des zweiten Aktivzeitdauerabschnitts Δt2 entsprechen.

Insgesamt kann so eine Aktivzeitdauer T_{A} bestimmt werden, über welche die Druckfluidzufuhr während des Arbeitszyklus aktiviert ist. Die gesamte Aktivzeitdauer T_{A} entspricht der Summe der einzelnen Aktivzeitdauerabschnitte, im dargestellten Beispiel gilt T_{A} = Δt1 + Δt2.

Mit der Zeitmesseinrichtung 28 kann vorzugsweise auch die gesamte Zyklusdauer Tₜₒₜ gemessen werden, welche im dargestellten Beispiel zwischen dem ersten Einschaltzeitpunkt 36 und dem zweiten Abschaltzeitpunkt 42 definiert ist.

Aus der Aktivzeitdauer T_{A} und der Zykluszeitdauer Tₜₒₜ kann ein Quotient gebildet werden, welcher das Aktivzeitverhältnis des Arbeitszyklus wiedergibt. Das Aktivzeitverhältnis ist ein Maß für die Energieeffizienz des Arbeitszyklus.

Während des Arbeitszyklus wird der in dem Druckzugang 16 herrschende Versorgungsdruck p_{V} mittels des Versorgungsdrucksensors 22 gemessen. Während der Aktivzeitdauer T_{A} ist die Druckfluidzufuhr aktiviert und somit strömt von der Druckfluidversorgungseinrichtung 14 Druckfluid unter einem dem Versorgungsdruck p_{V} entsprechenden Gesamtdruck durch den Druckzugang 16. Unter Zuhilfenahme von Strömungskenngrößen des Unterdruckerzeugers 10 wird das dem Unterdruckerzeuger 10 in dem Arbeitszyklus zugeführte Volumen an Druckfluid aus der Aktivzeitdauer T_{A} und dem Versorgungsdruck p_{V} berechnet. Die Strömungskenngrößen können beispielsweise einen Strömungswiderstand der Gesamtanordnung des Unterdruckerzeugers samt strömungswirksamen Bauteilen wie z.B. Versorgungsventil 20 umfassen. Die Kenngrößen können in der Steuereinrichtung 26 hinterlegt sein. Aus dem in einem Arbeitszyklus zugeführten Volumen von Druckfluid wird die Energieaufnahme des Unterdruckerzeugers 10 von der Unterdruckversorgungseinrichtung 14 in dem Arbeitszyklus berechnet.

Die Figur 3 zeigt den Zeitverlauf des Saugseitendrucks p_{S} über einen Arbeitszyklus in einem Fall, in dem kein vollständig dichter Abschluss des Sauganschlusses 18 erzielt wird.

Der dargestellte Arbeitszyklus ist wiederum entlang der Zeitachse unterteilt in aufeinander folgende Arbeitsbereiche 30, 32 und 34. Der erste Arbeitsbereich 30 beginnt mit dem ersten Einschaltzeitpunkt 46, zu welchem die Druckfluidzufuhr aktiviert wird und infolgedessen der Saugseitendruck p_{S} unter dem Umgebungsdruck p₀ absinkt. Sobald ein Haltewert H1 erreicht ist, kann von einer sicheren Handhabung eines Werkstücks mit der Unterdruckhandhabungsvorrichtung 12 ausgegangen werden. An den ersten Arbeitsbereich 30 schließt sich der zweite Arbeitsbereich 32 an, in welchem der Saugseitendruck p_{S} zwischen dem Haltewert H1 und einem Regelhaltewert H1+h1 geregelt wird. Hierbei stellt die Größe h1 einen positiven Offset-Druck oberhalb des Haltewertes H1 dar. Auch der Regelhaltewert H1+h1 ist vorzugsweise derart gewählt, dass eine sichere Handhabung eines Werkstückes noch gewährleistet ist.

Nach Deaktivierung der Druckfluidzufuhr im ersten Abschaltzeitpunkt 48 steigt der Saugseitendruck p_{S} in dem Sauganschluss 18 wieder an, beispielsweise aufgrund von Leckage an der Unterdruckhandhabungsvorrichtung 12 mit aufgenommenem Werkstück. Sobald der Saugseitendruck p_{S} ausgehend von dem Haltewert H1 auf den Regelhaltewert H1+h1 angestiegen ist, wird die Druckfluidzufuhr zu einem zweiten Einschaltzeitpunkt 50 wieder aktiviert. Beispielsweise kann die Steuereinrichtung 26 derart ausgebildet sein, dass das Versorgungsventil 20 die Druckfluidzufuhr freigibt, wenn in dem zweiten Arbeitsbereich 32 ausgehend von dem Haltewert H1 der Saugseitendruck p_{S} über den Regelhaltewert H1+h1 ansteigt. Nach Aktivierung der Druckfluidzufuhr im zweiten Einschaltzeitpunkt 50 sinkt aufgrund des Ansaugens durch den Sauganschluss 18 der Saugseitendruck p_{S} wieder ab, und wird vorzugsweise wiederum bei Erreichen des Haltewerts H1 zu einem zweiten Abschaltzeitpunkt 52 deaktiviert.

Bei deaktivierter Druckfluidzufuhr steigt der Saugseitendruck p_{S} danach wieder an und übersteigt ggf. den Regelhaltewert H1+h1. Aufgrund der Regelung des Unterdruckerzeugers 10 wird dann in einem dritten Einschaltzeitpunkt 54 die Druckfluidzufuhr wieder aktiviert und zu einem dritten Abschaltzeitpunkt 46 deaktiviert, in welchem der Saugseitendruck p_{S} wieder den Haltewert H1 erreicht hat. Zum Beenden des Arbeitszyklus kann, wie vorstehend im Zusammenhang mit Figur 2 erläutert, der Saugseitendruck p_{S} auf den oder über den Umgebungsdruck p₀ ansteigen, um beispielsweise ein Ablegen eines Werkstückes zu gewährleisten. Hierzu ist ab einem vierten Einschaltzeitpunkt 58 die Druckfluidzufuhr wiederum aktiviert. Der Arbeitszyklus endet mit Deaktivierung der Druckfluidzufuhr zu einem letzten Abschaltzeitpunkt 60.

Mit der Zeitmesseinrichtung 28 wiederum die Zeitdauern derjenigen Zeitabschnitte gemessen werden, in welchen die Druckfluidzufuhr aktiviert ist, also Δt1 zwischen erstem Einschaltzeitpunkt 46 und erstem Ausschaltzeitpunkt 48, Δt2 zwischen zweitem Einschaltzeitpunkt 50 und zweitem Abschaltzeitpunkt 52, Δt3 zwischen drittem Einschaltzeitpunkt 54 und drittem Abschaltzeitpunkt 56 sowie Δt4 zwischen letztem Einschaltzeitpunkt 58 und letztem Abschaltzeitpunkt 60 zum Beenden des Arbeitszyklus. Die gesamte Aktivzeitdauer in dem Arbeitszyklus ergibt sich wiederum als Summe sämtlicher Aktivzeitdauerabschnitte, T_{A} = Δt1+Δt2+Δt3+ Δt4.

Die Zeitmesseinrichtung 28 wirkt vorzugsweise derart mit der Steuereinrichtung 26 zusammen, dass nach Ermittlung eines Aktivzeitdauerabschnittes, über welchen in einem Arbeitszyklus die Druckfluidzufuhr aktiviert ist, ein den Aktivzeitdauerabschnitt repräsentierender Wert in der Steuereinrichtung 26 hinterlegt wird. Weiterhin können vorzugsweise am Ende eines Arbeitszyklus die in der Steuereinrichtung 26 hinterlegten Werte für die Aktivzeitdauerabschnitte addiert werden, um die gesamte Aktivzeitdauer T_{A} für den Arbeitszyklus zu erhalten.

Wie bereits zu Figur 2 erläutert, kann zusätzlich die Zyklusdauer Tₜₒₜ mit der Zeitmesseinrichtung 28 gemessen werden. Das Aktivzeitdauerverhältnis T_{A}/Tₜₒₜ gibt ein Maß für die Energieeffizienz in dem Arbeitszyklus wieder. Ebenso wird unter Zuhilfenahmen von Strömungskenngrößen aus dem in dem Druckzugang 16 herrschenden Versorgungsdruck p_{V} und der Aktivzeitdauer T_{A} der Verbrauch an Druckfluid und/oder ein Energieverbrauch des Unterdruckerzeugers 10 ermittelt.

Bei Verwendung eines Unterdruckerzeugers 10 gemäß dem dargestellten Verfahren mit einer Unterdruckhandhabungsvorrichtung 12 werden üblicherweise eine Vielzahl von Arbeitszyklen aufeinanderfolgend durchgeführt. Zur weiteren Ausgestaltung können in der Steuereinrichtung 26 jeweils den Arbeitszyklen zugeordnete Daten über die Aktivzeitdauern oder die hieraus ermittelten Informationen hinterlegt werden. Durch Auswertung der verschiedenen aufeinanderfolgenden Arbeitszyklen zugeordneten Aktivzeitdauern oder hieraus gewonnenen Informationen kann eine Trendinformation abgeleitet werden, welche beispielsweise eine Verschlechterung der Energieeffizienz des Unterdruckerzeugers bzw. des Systems aus Unterdruckerzeuger und Unterdruckhandhabungsvorrichtung anzeigen kann.

## Patentansprüche

1. Verfahren zum Betreiben eines Unterdruckerzeugers (10) unter Verwendung von Druckfluid zum Erzeugen des Unterdrucks, wobei der Unterdruckerzeuger (10) einen Druckzugang (16) zur Druckfluidzufuhr und einen Sauganschluss (18) aufweist, wobei im Betrieb des Unterdruckerzeugers (10) Arbeitszyklen durchgeführt werden, wobei während eines Arbeitszyklus die Druckfluidzufuhr wenigstens einmal aktiviert und danach wenigstens einmal wieder deaktiviert wird, **dadurch gekennzeichnet, dass** während des Arbeitszyklus eine Aktivzeitdauer (T_{A}) als diejenige Zeitdauer gemessen wird, über welche die Druckfluidzufuhr während des Arbeitszyklus aktiviert ist, und dass während des Arbeitszyklus der in dem Druckzugang (16) herrschende Versorgungsdruck (p_{V}) des Druckfluids gemessen wird,
und dass aus der Aktivzeitdauer (T_{A}); aus dem gemessenen Versorgungsdruck (p_{V}) und aus bekannten Strömungskenngrößen des Unterdruckerzeugers (10) das dem Unterdruckerzeuger (10) zugeführte Volumen an Druckfluid und/oder die dem Unterdruckerzeuger (10) über Druckfluid zugeführte Energie ermittelt wird.

2. Verfahren nach Anspruch 1, **dadurch gekennzeichnet, dass** mehrere aufeinander folgende Arbeitszyklen durchgeführt werden und für den jeweiligen Arbeitszyklus Daten über das zugeführte Volumen an Druckfluid und/oder die dem Unterdruckerzeuger (10) über Druckfluid zugeführte Energie in einer Speichereinrichtung hinterlegt werden.

3. Verfahren nach dem vorherigen Anspruch, **dadurch gekennzeichnet, dass** aus den hinterlegten Daten eine Trendinformation für das zugeführte Volumen an Druckfluid und/oder die dem Unterdruckerzeuger (10) über Druckfluid zugeführte Energie ermittelt wird.

4. Verfahren nach einem der vorherigen Ansprüche, **dadurch gekennzeichnet, dass** für einen Arbeitszyklus eine Zykluszeitdauer (Tₜₒₜ) gemessen wird, über welche der Arbeitszyklus durchgeführt wird.

5. Verfahren nach dem vorherigen Anspruch, **dadurch gekennzeichnet, dass** für den Arbeitszyklus ein Aktivzeitverhältnis aus Aktivzeitdauer (T_{A}) und Zykluszeitdauer (Tₜₒₜ) ermittelt wird.

6. Verfahren nach dem vorherigen Anspruch, **dadurch gekennzeichnet, dass** mehrere aufeinander folgende Arbeitszyklen durchgeführt werden und für den jeweiligen Arbeitszyklus Daten über die Aktivzeitdauer (T_{A}) und die Zykluszeitdauer (Tₜₒₜ) oder über das Aktivzeitverhältnis in einer Speichereinrichtung hinterlegt werden.

7. Verfahren nach einem der vorherigen Ansprüche, **dadurch gekennzeichnet, dass** eine Anzeige der mittels der Aktivzeitdauer (T_{A}) ermittelten Information, insbesondere des in dem Arbeitszyklus zugeführten Volumens an Druckfluid und/oder der über Druckfluid zugeführten Energie, und/oder eines Aktivzeitverhältnisses und/oder einer Trendinformation für das zugeführte Volumen an Druckfluid und/oder der dem Unterdruckerzeuger (10) über Druckfluid zugeführte Energie und/oder einer Trendinformation über das Aktivzeitverhältnis erfolgt.

8. Verfahren nach einem der vorherigen Ansprüche, **dadurch gekennzeichnet, dass** während des Arbeitszyklus der in dem Sauganschluss (18) herrschende Saugseitendruck (p_{S}) gemessen wird, und dass die Druckfluidzufuhr in Abhängigkeit des Saugseitendrucks (p_{S}) aktiviert und deaktiviert wird.

9. Unterdruckerzeugervorrichtung (10) zur Durchführung eines Verfahrens nach einem der Ansprüche 1 bis 8, welche einen Druckzugang (16) zur Druckfluidzufuhr und einen Sauganschluss (18) aufweist, wobei eine Steuereinrichtung (26) derart vorgesehen ist, dass die Druckfluidzufuhr für den Druckzugang (16) zur Durchführung eines Arbeitszyklus aktivierbar und deaktivierbar ist, **dadurch gekennzeichnet, dass** eine Zeitmesseinrichtung (28) derart vorgesehen ist, dass während des Arbeitszyklus eine Aktivzeitdauer (T_{A}) als diejenige Zeitdauer messbar ist, über welche im Betrieb der Vorrichtung (10) die Druckfluidzufuhr aktiviert ist, und dass ein Versorgungsdrucksensor (22) vorgesehen ist, mittels welchem der im Druckzugang (16) herrschende Versorgungsdruck (p_{V}) des Druckfluids messbar ist.

10. Vorrichtung (10) nach Anspruch 9, **dadurch gekennzeichnet, dass** ein Saugdrucksensor (24) vorgesehen ist, mittels welchem der in dem Sauganschluss (18) herrschende Saugseitendruck (p_{S}) messbar ist.

11. Vorrichtung nach einem der Ansprüche 9 oder 10, **dadurch gekennzeichnet, dass** eine Anzeigeeinrichtung zur Anzeige der mittels der Aktivzeitdauer (T_{A}) ermittelbaren Information, insbesondere des zugeführten Volumens an Druckfluid und/oder der über Druckfluid zugeführten Energie, und/oder eines Aktivzeitverhältnisses und/oder einer Trendinformation für das zugeführte Volumen an Druckfluid und/oder der dem Unterdruckerzeuger (10) über Druckfluid zugeführte Energie und/oder einer Trendinformation über das Aktivzeitverhältnis vorgesehen ist.

## Claims

1. A method for operating a negative pressure generator (10), using pressure fluid for generating the negative pressure, in which the negative pressure generator (10) has a pressure access (16) for supplying pressure fluid and a suction connection (18), and in operation of the negative pressure generator (10), operating cycles are performed, and during an operating cycle the pressure fluid supply is activated at least once and afterward deactivated again at least once, **characterized in that** during the operating cycle, an active time period (T_{A}) is measured as the period of time during which the pressure fluid supply is activated during the operating cycle, and that during the operating cycle, the supply pressure (p_{V}) of the pressure fluid prevailing in the pressure access (16) is measured, and **in that** from the active time period (T_{A}), the measured supply pressure (p_{V}), and known flow parameters of the negative pressure generator (10), the volume of pressure fluid supplied to the negative pressure generator (10) and/or the energy supplied to the negative pressure generator (10) via pressure fluid is determined.

2. The method of claim 1, **characterized in that** a plurality of successive operating cycles are performed, and for each operating cycle data about the volume of pressure fluid supplied and/or the energy supplied to the negative pressure generator (10) via pressure fluid are stored in a memory device.

3. The method of the foregoing claim, **characterized in that** from the stored data, trend information for the volume of pressure fluid supplied and/or the energy supplied to the negative pressure generator (10) via pressure fluid is ascertained.

4. The method of one of the foregoing claims, **characterized in that** for an operating cycle, a cycle time period (Tₜₒₜ) during which the operating cycle is performed is measured.

5. The method of the foregoing claim, **characterized in that** for the operating cycle, an active time ratio is ascertained from the active time period (T_{A}) and the cycle time period (Tₜₒₜ).

6. The method of the foregoing claim, **characterized in that** a plurality of successive operating cycles are performed and for each operating cycle, data about the active time period (T_{A}) and the cycle time period (Tₜₒₜ) or about the active time ratio are stored in a memory device.

7. The method of one of the foregoing claims, **characterized in that** a display is effected of the information ascertained by means of the active time period (T_{A}), in particular the volume of pressure fluid supplied in the operating cycle and/or the energy supplied via pressure fluid, and/or an active time ratio and/or trend information for the volume of pressure fluid supplied and/or the energy supplied to the negative pressure generator (10) via pressure fluid, and/or trend information about the active time ratio.

8. The method of one of the foregoing claims, **characterized in that** during the operating cycle, the suction-side pressure (p_{S}) prevailing in the suction connection (18) is measured, and that the pressure fluid supply is activated and deactivated as a function of the suction-side pressure (p_{S}).

9. A negative pressure generator device (10) for performing a method of one of claims 1 through 8, which has a pressure access (16) for supplying pressure fluid and a suction connection (18), and a control device (26) is provided in such a way that the pressure fluid supply for the pressure access (16) is activatable and deactivatable for performing an operating cycle, **characterized in that** a time measuring device (28) is provided in such a way that during the operating cycle, an active time period (T_{A}) is measurable as the period of time during which, when the device (10) is in operation, the pressure fluid supply is activated, and that a supply pressure sensor (22) is provided, by means of which the supply pressure (p_{V}) of the pressure fluid prevailing in the pressure access (16) is measurable.

10. The device (10) of claim 9, **characterized in that** a suction pressure sensor (24) is provided, by means of which the suction-side pressure (p_{S}) prevailing in the suction connection (18) is measurable.

11. The device of one of claims 9 or 10, **characterized in that** a display device is provided for displaying the at least one item of information ascertainable, in particular the supply volume of pressure fluid and/or the energy supplied via pressure fluid, and/or an active time ratio and/or trend information for the supply volume of pressure fluid and/or the energy supplied to the negative pressure generator (10) via pressure fluid and/or trend information about the active time ratio.

## Revendications

1. Procédé pour faire fonctionner un générateur de dépression (10) en utilisant du fluide sous pression pour générer la dépression, ledit générateur de dépression (10) présentant un accès de pression (16) pour l'alimentation en fluide sous pression et un raccord d'aspiration (18), des cycles de travail étant mis en oeuvre lors du fonctionnement du générateur de dépression (10), dans lequel, durant un cycle de travail, l'alimentation en fluide sous pression est au moins une fois activée et ensuite au moins une fois à nouveau désactivée, **caractérisé par le fait que**, durant le cycle de travail, on mesure une durée active (T_{A}) comme la durée sur laquelle l'alimentation en fluide sous pression est activée durant le cycle de travail, et que, durant le cycle de travail, on mesure la pression d'alimentation (pᵥ) du fluide sous pression qui règne dans l'accès de pression (16), et que l'on détermine à partir de la durée active (T_{A}), à partir de la pression d'alimentation (pᵥ) mesurée et à partir de caractéristiques d'écoulement connues du générateur de dépression (10) le volume de fluide sous pression amené au générateur de dépression (10) et/ou l'énergie amenée au générateur de dépression (10) par le fluide sous pression.

2. Procédé selon la revendication 1, **caractérisé par le fait que** plusieurs cycles de travail successifs sont mis en oeuvre et que, pour le cycle de travail respectif, des données relatives au volume amené de fluide sous pression et/ou à l'énergie amenée au générateur de dépression (10) par le fluide sous pression sont mémorisées dans un dispositif de stockage.

3. Procédé selon la revendication précédente, **caractérisé par le fait que** l'on détermine à partir des données mémorisées une information de tendance pour le volume amené de fluide sous pression et/ou pour l'énergie amenée au générateur de dépression (10) par le fluide sous pression.

4. Procédé selon l'une quelconque des revendications précédentes, **caractérisé par le fait que** l'on mesure pour un cycle de travail une durée de cycle (Tₜₒₜ) sur laquelle le cycle de travail est mis en oeuvre.

5. Procédé selon la revendication précédente, **caractérisé par le fait que** l'on détermine pour le cycle de travail un rapport de temps actif de la durée active (T_{A}) et de la durée de cycle (Tₜₒₜ).

6. Procédé selon la revendication précédente, **caractérisé par le fait que** plusieurs cycles de travail successifs sont mis en oeuvre et que, pour le cycle de travail respectif, des données relatives à la durée active (T_{A}) et à la durée de cycle (Tₜₒₜ) ou relatives au rapport de temps actif sont mémorisées dans un dispositif de stockage.

7. Procédé selon l'une quelconque des revendications précédentes, **caractérisé par le fait qu'**un affichage de l'information déterminée à partir de la durée active (T_{A}), en particulier du volume de fluide sous pression amené dans le cycle de travail et/ou de l'énergie amenée par le fluide sous pression, et/ou d'un rapport de temps actif et/ou d'une information de tendance pour le volume amené de fluide sous pression et/ou de l'énergie amenée au générateur de dépression (10) par le fluide sous pression et/ou d'une information de tendance sur le rapport de temps actif a lieu.

8. Procédé selon l'une quelconque des revendications précédentes, **caractérisé par le fait que** la pression côté aspiration (pₛ) qui règne dans le raccord d'aspiration (18) est mesurée durant le cycle de travail et que l'alimentation en fluide sous pression est activée et désactivée en fonction de la pression côté aspiration (pₛ).

9. Dispositif de génération de dépression (10) pour la mise en oeuvre d'un procédé selon l'une quelconque des revendications 1 à 8, qui comprend un accès de pression (16) pour l'alimentation en fluide sous pression et un raccord d'aspiration (18), dans lequel un dispositif de commande (26) est prévu de telle manière que l'alimentation en fluide sous pression pour l'accès de pression (16) peut être activée et désactivée pour la mise en oeuvre d'un cycle de travail, **caractérisé par le fait qu'**un dispositif de mesure de temps (28) est prévu de telle manière que, durant le cycle de travail, une durée active (T_{A}) peut être mesurée comme la durée sur laquelle, en fonctionnement du dispositif (10), l'alimentation en fluide sous pression est activée, et qu'un capteur de pression d'alimentation (22) est prévu au moyen duquel la pression d'alimentation (pᵥ) du fluide sous pression qui règne dans l'accès de pression (16) peut être mesurée.

10. Dispositif (10) selon la revendication 9, **caractérisé par le fait qu'**un capteur de pression d'aspiration (24) est prévu au moyen duquel la pression côté aspiration (pₛ) qui règne dans le raccord d'aspiration (18) peut être mesurée.

11. Dispositif selon l'une quelconque des revendications 9 ou 10, **caractérisé par le fait qu'**un dispositif d'affichage destiné à afficher l'information apte à être déterminée à partir de la durée active (T_{A}), en particulier le volume amené de fluide sous pression et/ou l'énergie amenée par le fluide sous pression, et/ou un rapport de temps actif et/ou une information de tendance pour le volume amené de fluide sous pression et/ou l'énergie amenée au générateur de dépression (10) par le fluide sous pression et/ou une information de tendance sur le rapport de temps actif est prévu.
